# EUROPÄISCHE PATENTSCHRIFT

(11) **EP 1 174 309 B1**
(45) Veröffentlichungstag und Bekanntmachung des Hinweises auf die Patenterteilung: **28.02.2007**
(21) Anmeldenummer: 01108793.9
(22) Anmeldetag: 07.04.2001
(51) Int. Cl.: B60Q 3/02

(54) **Leuchte, insbesondere Leseleuchte für Fahrzeuge**
Light, particularly reading light for vehicle
Lampe, en particulier lampe de lecture pour véhicule

(30) Priorität: 21.07.2000 DE 10035528
(43) Veröffentlichungstag der Anmeldung: 23.01.2002
(73) Patentinhaber: HAPPICH Fahrzeug- und Industrieteile GmbH, 42285 Wuppertal (DE)
(72) Erfinder: Celik, Fahri, 42283 Wuppertal (DE); Jäckel, Helmut, 42553 Velbert (DE)

(56) Entgegenhaltungen:
- EP-A- 0 449 285
- FR-A- 2 529 521
- GB-A- 1 501 974

## Beschreibung

Die Erfindung bezieht sich auf eine Leuchte, insbesondere Leseleuchte für Fahrzeuge, mit einem mit einer Fassung zur Halterung eines Leuchtmittels ausgebildeten Reflektor, einer Blendscheibe und einem an einer mit einer Lochung versehenen Trägerplatte festlegbaren Haltekörper, wobei der Haltekörper als Haltering mit einem die Lochung in der Trägerplatte durchsetzenden Rohrstutzen, einem sich auf der Trägerplatte abstützenden Flansch, aus dem Rohrstutzen freigesparten Klipsnasen zum Hinterrasten des Lochrands der Trägerplatte.

Bei herkömmlichen, durch offenkundige Benutzung bekanntgewordenen Leuchten der vorgenannten Art wird ganz allgemein bemängelt, daß sie eine aufwendige Gestaltung und Befestigungsanordnung aufweisen. Die Befestigungsanordnung erfolgt im allgemeinen mittels Schrauben mit entsprechend langwierigem Montageaufwand, was insbesondere bei einem Austausch defekter Glühlampen oder dgl. Leuchtmittel sehr lästig ist. Aus EP 0449 285 A ist eine gattungsmäßige Leuchte bekannt.

Der vorliegenden Erfindung liegt daher die Aufgabe zugrunde, eine Leuchte der eingangs genannten Art zur Verfügung zu stellen, die einfach und kostengünstig im Aufbau ist, die schnell und einfach montierbar ist und die insbesondere auch einen problemlosen Austausch einer defekten Glühlampe oder dgl. Leuchtmittel erlaubt.

Zur Lösung dieser Aufgabe ist erfindungsgemäß vorgesehen, daß der Haltering ferner mit bügelartigen jeweils eine Kulissennut bildenden Fortsätzen am freien Ende des Rohrstutzens ausgebildet ist, daß die Blendscheibe topfförmig gestaltet ist mit einem Boden, einer auf den Innendurchmesser des Rohrstutzens abgestimmten Topfwandung und einem sich am freien Ende des Rohrstutzens abstützenden Flansch und daß der Reflektor an einem vorderseitigen Rand radial überstehende Nasen aufweist, die in die Kulissennuten einführbar und in diesen nach Art eines Bajonettverschlusses unter Anpressung des vorderseitigen Reflektorrands an den Flansch der Blendscheibe festlegbar sind.

Mit der erfindungsgemäßen Leuchte wird die gestellte Aufgabe optimal gelöst. Zunächst ist der als Halterung ausgebildete Haltekörper ein einfaches und preisgünstig zu fertigendes Bauteil, das zufolge der daran angeordneten Klipsnasen an einer gelochten Trägerplatte in einfachster Weise, nämlich durch eine Steckmontage montierbar ist. Gleiches gilt auch für die Blendscheibe, die einen zusätzlichen Vorteil insofern aufweist, als sie die Klipsnasen des Halterings im montierten Zustand gegen ein Ausrasten sichert. Der Reflektor kann mittels einer einfachen Steckmontage und einer sich daran anschließenden geringen Drehbewegung am Haltering festgelegt werden. Zum Auswechseln einer Glühlampe ist lediglich die bajonettverschlußartige Verbindung zwischen dem Reflektor und dem Haltering zu lösen und nach erfolgtem Glühlampenwechsel wiederherzustellen.

Vorteilhafte Ausgestaltungen und zweckmäßige Weiterbildungen der Erfindung sind in den Unteransprüchen gekennzeichnet.

Ein Ausführungsbeispiel der Erfindung wird im folgenden anhand der Zeichnungen näher erläutert, und es zeigen:
- Fig. 1: eine Explosivdarstellung der neuen Leuchte nebst Trägerplatte in einer perspektivischen Darstellungsmanier,

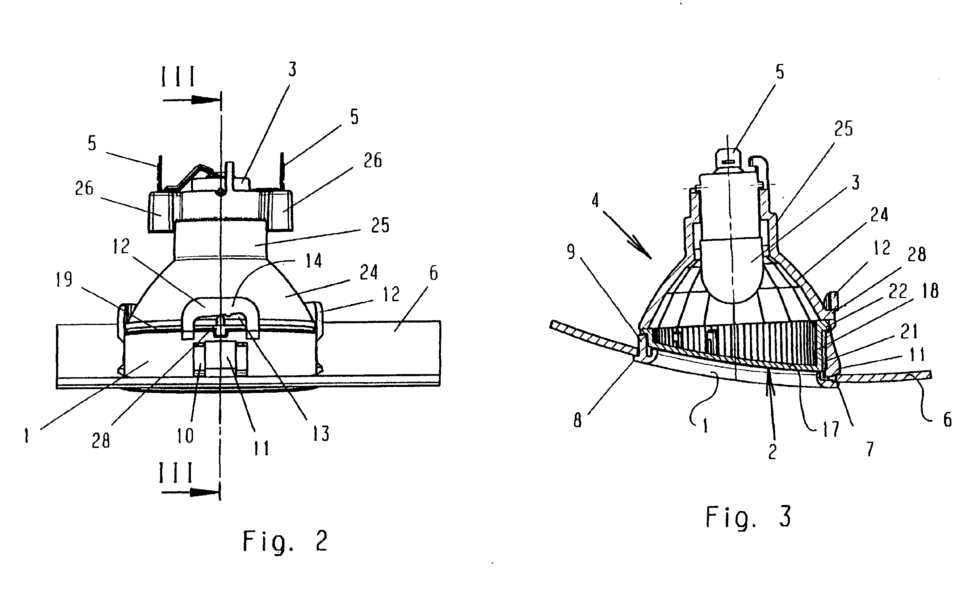

- Fig. 2: eine Seitenansicht der an einer Trägerplatte montierten Leuchte und
- Fig. 3: einen Schnitt III - III nach Fig. 2

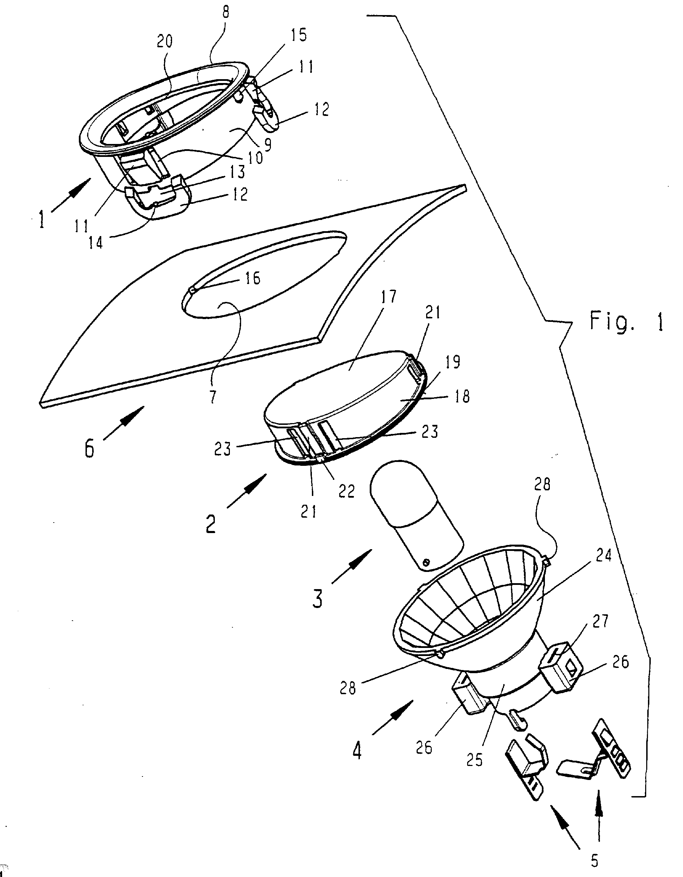

Bei der neuen Leuchte gemäß dem dargestellten Ausführungsbeispiel handelt es sich um eine Leseleuchte, wie sie in Großraumfahrzeugen zur Personenbeförderung oberhalb der Sitzreihen am Boden des Luftkanals befestigt in vielfacher Anordnung einzubauen ist. Die Leuchte besteht, in Fig. 1 von oben nach unten gezeigt, aus einem Haltering 1, einer Blendscheibe 2, einer Glühlampe 3, einem Reflektor 4 und aus Kontaktfedern 5, an die nicht gezeigte elektrische Leiter anzuschließen sind. Die neue Leuchte ist an einer Trägerplatte 6, die mit einer Lochung 7 versehen ist, anordbar. Bei der Trägerplatte 6 kann es sich insbesondere um den unteren abklappbaren und damit auch von hinten zugänglichen Abschluß eines Luftkanals, wie er bei Großraumfahrzeugen, z. B. Omnibussen üblich ist, handeln.

Der Haltering 1 ist ein Kunststoff-Spritzgußteil mit einem Flansch 8, einem Innenkragen 20, einem Rohrstutzen 9, im Rohrstutzen 9 durch Freisparungen 10 gebildete Klipsnasen 11 und bügelartigen Fortsätzen 12 am freien Rohrstutzenende, die jeweils eine Kulissennut 13 mit einer durch einen warzenartigen Vorsprung 14 gebildete Verengung aufweisen. Die Fortsätze 12 sind nach außen versetzt, so daß am freien Ende des Rohrstutzens 9 eine kreisringförmige Abstützfläche verbleibt. Am Außenmantel des Rohrstutzens 9 sind zwei einander diametral gegenüberliegende Zentriervorprünge 15 angeformt, die als Verdrehsicherung des Halterings dienen und in Lochungserweiterungen 16 der Trägerplatte 6 eingreifen.

Der Haltering 1 wird an der Trägerplatte 6 festgelegt, indem er in die Lochung 7 eingeführt wird. Beim Einführen weichen die Klipsnasen 11 durch Reibung am Lochungsrand federelastisch ins Innere des Rohrstutzens 9 zurück um nach der Passage des Lochungsrands wieder ihre dargestellte Ausgangslage einzunehmen. Damit ist der Haltering zuverlässig an der Trägerplatte 6 vormontiert und der Flansch 8 auf der Trägerplatte 6 abgestützt.

Die Blendscheibe 2 besteht aus einem transparenten Kunststoffmaterial und ist topfförmig ausgebildet. Die Blendscheibe 2 weist einen Boden 17, eine Topfwandung 18 und einen Flansch 19 auf. Am Außenmantel der Topfwandung sind radial vorspringende Rippen 21 angeformt sowie ein Zentriersteg 22. Schlitzöffnungen 23 in der Blendscheibe 2 dienen zur Entlüftung bzw. zur Abführung von durch die Lichtquelle ausgehender Wärme. Die Blendscheibe 2 wird in den Haltering 1 mit ihrem Boden 17 voraus eingesteckt, wobei die Rippen 21 sich an der Rückseite der Klipsnasen 11 abstützen, so daß sich diese nicht mehr ins Innere des Rohrstutzens 9 hineinbewegen können, sondern vielmehr gegen den Lochrand der Lochung 7 gepreßt werden. Der Zentriersteg 22 greift in eine aus freien Rohrstutzenenden vorgesehene Aussparung ein, so daß für die Blendscheibe 2 eine lagesichere Anordnung zum Haltering 1 gewährleistet ist. Im übrigen stützt sich der Flansch 19 der Blendscheibe 2 am freien Ende des Rohrstutzens 9 ab.

Im Ausführungsbeispiel ist eine Glühlampe 3 als Lichtquelle vorgesehen. Natürlich können auch andere Lichtquellen handelsüblicherart verwendet werden.

Der Reflektor 4 ist zweckmäßigerweise aus Leichtmetall gebildet und verchromt oder dgl. ausgeführt. Der Reflektor 4 besteht aus dem eigentlichen Reflektorschirm 24 und einem Halterungsteil 25 für die Glühlampe 3. Am Halterungsteil 25 sitzen Steckaufnahmen 26 mit Einschubschlitzen 27 für die Kontaktfedern 5. Am vorderseitige Reflektorende sind radial überstehende Nasen 28 angeformt.

Bei der Montage der neuen Leuchte wird zunächst der Haltering 1 an der Trägerplatte 6 wie schon beschrieben befestigt. Danach wird der Haltering 1 mit der Blendscheibe 2 bestückt. In den Reflektor 4 werden die Kontaktfedern 5, wie auch die Glühlampe 3 eingesetzt. Diese Baueinheit wird mit dem Haltering 1 verbunden, indem die Nasen 28 durch im Steg der Fortsätze 12 ausgebildete Nuten (nicht gezeigt) bis in die Kulissennuten 13 hinein geführt werden. Durch eine leichte Drehbewegung des Reflektors 4 wird erreicht, daß die Nasen 28 die warzenartigen Vorsprünge 14 überwinden und sodann in den Kulissennuten 13 gefangen sind. Durch die Drehung des Reflektors 4 geraten die Nasen 28 innerhalb der Kulissennuten 13 auch auf eine höhere Anlageebene, womit erreicht wird, daß der Reflektorrand gegen den Flansch 19 der Blendscheibe 2 und die Blendscheibe 2 gleichzeitig gegen das freie Ende des Rohrstutzens 9 gepreßt wird. Damit ist eine sichere, insbesondere aber auch eine völlig klapperfreie Befestigungsanordnung der neuen Leuchte an einer Trägerplatte 6 oder dgl. gewährleistet.

## Patentansprüche

1. Leuchte, insbesondere Leseleuchte für Fahrzeuge, mit einem mit einer Fassung zur Halterung eines Leuchtmittels ausgebildeten Reflektor (4), einer Blendscheibe (2) und einem an einer mit einer Lochung (7) versehenen Trägerplatte (6) festlegbaren Haltekörper, wobei der Haltekörper als Haltering (1) mit einem die Lochung (7) in der Trägerplatte (6) durchsetzenden Rohrstutzen (9), einem sich auf der Trägerplatte (6) abstützenden Flansch (8), aus dem Rohrstutzen (9) freigesparten Klipsnasen (11) zum Hinterrasten des Lochrands der Tragerplatte (6) **dadurch gekennzeichnet, dass** der Haltering (1) ferner mit bügelartigen jeweils eine Kulissennut (13 bildenden Fortsätzen (12) am freien Ende des Rohrstutzens (9) ausgebildet ist, daß die Blendscheibe (2) topfförmig gestaltet ist mit einem Boden (17), einer auf den Innendurchmesser des Rohrstutzens (9) abgestimmten Topfwandung (18) und einem sich am freien Ende des Rohrstutzens (9) abstützenden Flansch (19) und daß der Reflektor (4) an seinem vorderseitigen Rand radial überstehende Nasen (28) aufweist, die in die Kulissennuten (13) einführbar und in diesen nach Art eines Bajonettverschlusses unter Anpressung des vorderseitigen Reflektorrands an den Flansch (19) der Blendscheibe (2) festlegbar sind.

2. Leuchte nach Anspruch 1, **dadurch gekennzeichnet, daß** die Kulissennuten (13) jeweils durch einen von den Nasen (28) des Reflektors (4) überwindbaren warzenförmigen Vorsprung (14) verengt sind.

3. Leuchte nach Anspruch 1 oder 2, **dadurch gekennzeichnet, daß** der Haltering (1) als Kunststoff-Spritzgußteil ausgebildet ist und zusätzlich mit Zentriervorsprüngen (15) versehen ist.

4. Leuchte nach einem oder mehreren der Ansprüche 1 - 3, **dadurch gekennzeichnet, daß** die Blendscheibe (2) aus einem transparenten, lichtdurchlässigen Kunststoffmaterial besteht und mit vorstehenden Rippen (21), Schlitzöffnungen (23) sowie einem Zentriersteg (22) ausgebildet ist.

## Claims

1. Light, particularly reading light for vehicles, having a reflector (4), which is formed with a lampholder for holding a luminous means, an anti-glare screen (2) and a holding body, which can be fixed to a carrier plate (6) provided with a hole (7), the holding body being in the form of a holding ring (1) having a tubular connector (9), which passes through the hole (7) in the carrier plate (6), a flange (8), which is supported on the carrier plate (6), clip tabs (11), which are cut out of the tubular connector (9), for latching behind the hole rim of the carrier plate (6), **characterized in that** the holding ring (1) is also designed to have bow-like protrusions (12), which each form a link slot (13), at the free end of the tubular connector (9), **in that** the anti-glare screen (2) is in the form of a pot with a base (17), a pot wall (18), which is matched to the inner diameter of the tubular connector (9), and a flange (19), which is supported on the free end of the tubular connector (9), and **in that** the reflector (4) has radially projecting tabs (28) at its front-side rim which can be inserted into the link slots (13) and can be fixed in them in the manner of a bayonet-type lock whilst pressing the front-side reflector rim against the flange (19) of the anti-glare screen (2).

2. Light according to Claim 1, **characterized in that** the link slots (13) are each narrowed by a button-shaped projection (14) which can be negotiated by the tabs (28) of the reflector (4).

3. Light according to Claim 1 or 2, **characterized in that** the holding ring (1) is in the form of a plastic injection-moulded part and is additionally provided with centring projections (15).

4. Light according to one or more of Claims 1 to 3, **characterized in that** the anti-glare screen (2) comprises a transparent, light-transmissive plastic material and is formed with protruding ribs (21), slit-shaped openings (23) and a centring web (22).

## Revendications

1. Lampe, notamment liseuse pour véhicules, avec un réflecteur (4) conçu avec une douille pour maintenir un moyen d'éclairage, avec une vitre de protection (2) et avec un corps de maintien susceptible de se fixer sur une plaque support (6) munie d'une perforation (7), le corps de maintien étant conçu sous la forme d'une bague de maintien (1) avec une tubulure (9) traversant la perforation (7) dans la plaque support (6), une bride (8) s'appuyant sur la plaque support (6), des talons à clipser (11) découpés dans la tubulure (9), pour s'enclencher par l'arrière dans le bord du trou de la plaque support (6), **caractérisée en ce que** la bague de maintien (1) est conçue par ailleurs avec sur l'extrémité libre de la tubulure (9) des prolongements (12) du type d'étriers, formant chacun une rainure à coulisse (13), **en ce que** la vitre de protection (2) est conçue en forme d'auge avec un fond (17), une paroi d'auge (18) adaptée au diamètre intérieur de la tubulure (9) et une bride (19) s'appuyant sur l'extrémité libre de la tubulure (9) et **en ce que** le réflecteur (4) comporte sur son bord avant des talons (28) dépassant en direction radiale, qui peuvent s'introduire dans les rainures à coulisse (13) et qui peuvent se fixer dans ces dernières à la façon d'une fermeture par baïonnette, en pressant le bord avant du réflecteur sur la bride (19) de la vitre de protection (2).

2. Lampe selon la revendication 1, **caractérisée en ce que** les rainures à coulisse (13) sont chacune rétrécies par une saillie (14) en forme de téton, pouvant être surmontée par les talons (28) du réflecteur (4).

3. Lampe selon la revendication 1 ou 2, **caractérisée en ce que** la bague de maintien (1) est conçue sous la forme d'une pièce en matière plastique moulée par injection et est munie en supplément de saillies de centrage (15).

4. Lampe selon l'une quelconque ou plusieurs des revendications 1 à 3, **caractérisée en ce que** la vitre de protection (2) consiste en une matière plastique transparente diaphane et est conçue avec des nervures (21) saillantes, des orifices en fentes (23) et avec un listel de centrage (22).
